# EUROPEAN PATENT APPLICATION

(11) **EP 3 148 283 A1**
(43) Date of publication of application: **29.03.2017**
(21) Application number: 16189623.8
(22) Date of filing: 20.09.2016
(51) Int. Cl.: H04W 76/02

(54) **METHOD AND APPARATUS FOR REDUCING SIGNALING OVERHEAD IN A WIRELESS COMMUNICATION SYSTEM**

(30) Priority: 25.09.2015 US 201562232842 P
(71) Applicant: ASUSTek Computer Inc., Peitou, Taipei-City 112 (TW)
(72) Inventor: PAN, Li-Te, 112 Taipei City (TW); CHEN, Wei-Yu, 112 Taipei City (TW)
(74) Representative: Hoefer & Partner Patentanwälte mbB

(57) **Abstract**

A method and apparatus are disclosed for a relay UE to receive packets from an eNB where the relay UE acts as a relay for forwarding the packets between a remote UE and the eNB. The method includes the relay UE connecting with the eNB (2005). The method further includes the relay UE being configured with a radio bearer between the relay UE and the eNB (2010). The method also includes the relay UE receiving a downlink packet on the radio bearer from the eNB, wherein the downlink packet is to be transmitted to the remote UE (2015). In addition, the method includes the relay UE not transmitting any resource request to the eNB for requesting a SL grant for transmission of a sidelink packet including the downlink packet when the sidelink packet becomes available for transmission and there is currently no data available for transmission to the remote UE (2020). Furthermore, the method includes the relay UE receiving the SL grant from the eNB (2025). Also, the method includes the relay UE using the SL grant to transmit the sidelink packet to the remote UE (2025).

## Description

This disclosure generally relates to wireless communication networks, and more particularly, to a method and apparatus for reducing signaling overhead in a wireless communication system. With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure is an Evolved Universal Terrestrial Radio Access Network (E-UTRAN). The E-UTRAN system can provide high data throughput in order to realize the above-noted voice over IP and multimedia services. A new radio technology for the next generation (e.g., 5G) is currently being discussed by the 3GPP standards organization. Accordingly, changes to the current body of 3GPP standard are currently being submitted and considered to evolve and finalize the 3GPP standard.

A method and apparatus for a relay UE (User Equipment) to receive packets from an eNB (evolved Node B) where the relay UE acts as a relay for forwarding the packets between a remote UE and the eNB are disclosed herein and are defined in independent claims 1, and 11, respectively. The respective dependent claims define preferred embodiments thereof, respectively.
FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 is a reproduction of Figure 4.4.3-1 of 3GPP TS 23.303 v13.0.0.
FIG. 6 is a reproduction of Figure 5.1.2.2-1 of 3GPP TS 23.303 v13.0.0.
FIG. 7 is a reproduction of Figure 6.1.1.1-1 of 3GPP TR 23.713 v1.6.0.
FIG. 8 is a reproduction of Figure 6.1.2.2.1.1 of 3GPP TR 23.713 v1.6.0.
FIG. 9 is a reproduction of Figure 6.1.2.2.2.1 of 3GPP TR 23.713 v1.6.0.
FIG. 10 is a reproduction of Figure 7.1.1.2.1 of 3GPP TR23.713 v1.6.0.
FIG. 11 is a reproduction of Figure 7.1.2.1.1 of 3GPP TR 23.713 v1.6.0.
FIG. 12 is a reproduction of Figure 7.1.2.4.1 of 3GPP TR 23.713 v1.6.0.
FIG. 13 is a reproduction of Figure 7.2.2.1 of 3GPP TR 23.713 v1.6.0.
FIG. 14 is a reproduction of Figure 6.1.3.1a-1 of 3GPP TS 36.321 v12.6.0.
FIG. 15 is a reproduction of Figure 6.1.3.1a-2 of 3GPP TS 36.321 v12.6.0.
FIG. 16 is a reproduction of Figure 1 of 3GPP R2-153129.
FIG. 17 is a message flow diagram according to one exemplary embodiment.
FIG. 18 is a message flow diagram in accordance with a first exemplary embodiment according to the invention.
FIG. 19 is a message flow diagram in accordance with a second exemplary embodiment according to the invention.
FIG. 20 is a flow chart in accordance with a third exemplary embodiment according to the invention.

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including: TS 23.303 v13.0.0, "Proximity-based services (ProSe)"; TR 23.713 v1.6.0, "Study on extended architecture enhancements to support for proximity-based services"; TS 36.300 v12.5.0, "E-UTRAN Overall description"; R2-153252 "Discussion on Resource Allocation for ProSe UE-to-Network Relay"; TS 36.331 v12.6.0, "E-UTRAN Radio Resource Control (RRC) Protocol specification"; 3GPP RAN2#91 Meeting Report; TS 36.321 v12.6.0, "E-UTRAN Medium Access Control (MAC) Protocol specification"; R2-153129 "Resource Allocation for Remote UE"; R2-153100 "Resource Allocation Aspects for UE-to-Network Relay"; S2-152570 "Clarification on ProSe UE-NW relay"; R2-151326 "Protocol Stack for UE-to-Network Relay"; and R2-153164 "Service Continuity Issue for SC PTM".

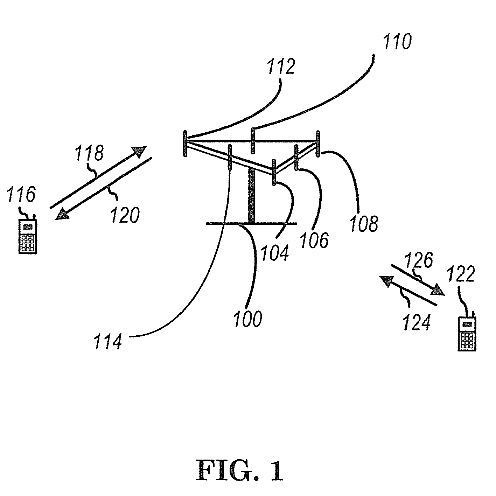

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

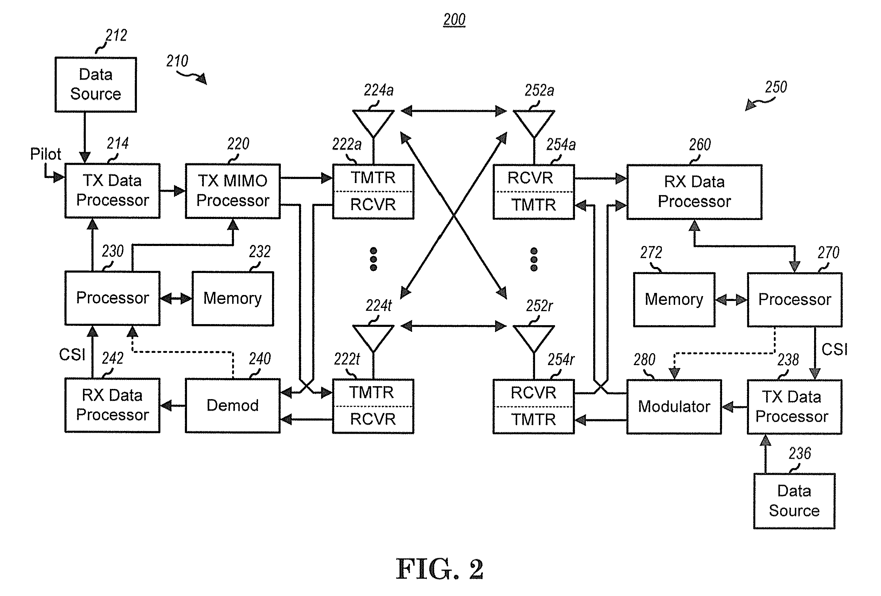

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

Preferably, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. Alternatively, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

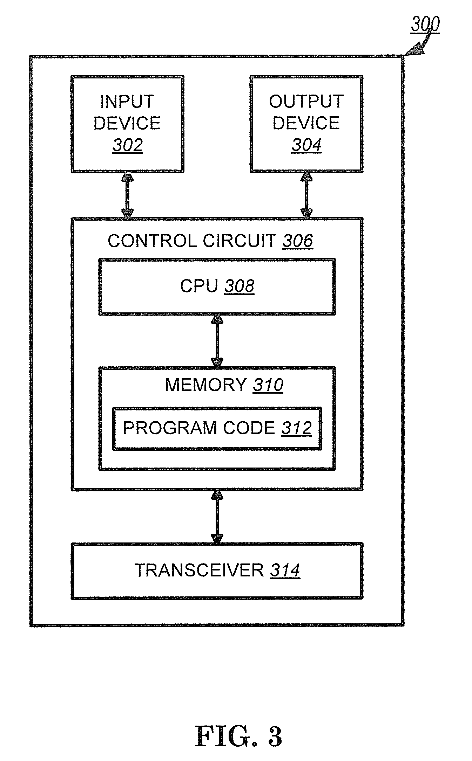

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1 or the base station (or AN) 100 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

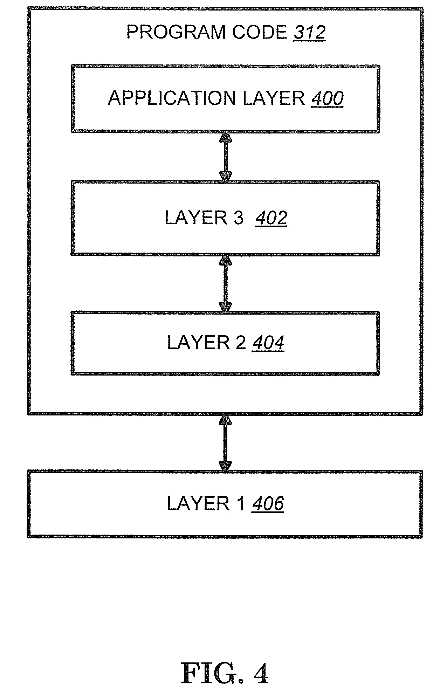

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

3GPP TS 23.303 v13.0.0 describes a Proximity-based Service (ProSe) UE-to-Network Relay as follows:

### 4.4.3 ProSe UE-to-Network Relay

The ProSe UE-to-Network Relay entity provides the functionality to support connectivity to "unicast" services for Remote UEs that are not "served by E-UTRAN" (see figure 4.4.3-1).

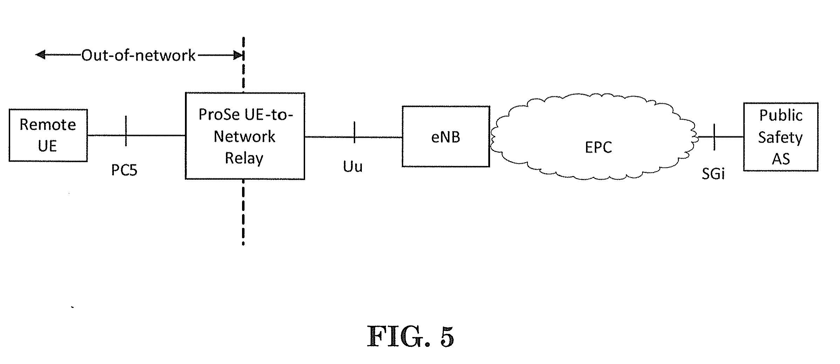

### [Figure 4.4.3-1 of 3GPP TS 23.303 v13.0.0 is reproduced as FIG. 5]

The ProSe UE-to-Network Relay shall relay unicast traffic (UL and DL) between the Remote UE and the network. The ProSe UE-to-Network Relay shall provide generic function that can relay any type of traffic that is relevant for public safety communication.
NOTE 1: There is no support for relaying eMBMS traffic from Uu interface to PC5 in this release of the specification.
NOTE 2: The IP Address preservation is not supported when the Remote UE moves out of the ProSe UE-to-Network Relay coverage.

One-to-one Direct Communication between Remote UEs and ProSe UE-to-Network Relays has the following characteristics:
- Communication over PC5 reference point is connectionless.
- ProSe Bearers are bi-directional. IP packets passed to the radio layers on a given ProSe bearer will be transmitted by the physical layer with the associated L2 destination address. IP packets passed up from the radio layers on the same ProSe bearer will have been received over the air addressed to the same L2 destination.

### 4.5.4 ProSe UE-to-Network Relaying

ProSe UE-to-Network Relaying shall include the following functions:
- ProSe Direct discovery following Model A or Model B can be used in order to allow the Remote UE to discover ProSe UE-to-Network Relay(s) in proximity.
- ProSe Direct discovery that can be used in order to allow the Remote UE to discover L2 address of the ProSe UE-to-Network Relay to be used by the Remote UE for IP address allocation and user plane traffic corresponding to a specific PDN connection supported by the ProSe UE-to-Network Relay.
- Act as an "announcing" or "discoveree" UE on the PC5 reference point supporting direct discovery.
- Act as a default router to the Remote UEs forwarding IP packets between the UE-ProSe UE-to-Network Relay point-to-point link and the corresponding PDN connection.
- Handle Router Solicitation and Router Advertisement messages as defined in IETF RFC 4861[10].
- Act as DHCPv4 Server and stateless DHCPv6 Relay Agent.
- Act as a NAT if IPv4 is used replacing the locally assigned IPv4 address of the Remote UE with its own.
- Map the L2 link ID used by the Remote UE as Destination Layer-2 ID to the corresponding PDN connection supported by the ProSe UE-to-Network Relay.

NOTE: The aspects of the radio layers for the PC5 reference point are defined in RAN specifications.

3GPP TS-23.303 v13.0.0 also specifies the user plane for UE - UE-to-Network Relay as follows:

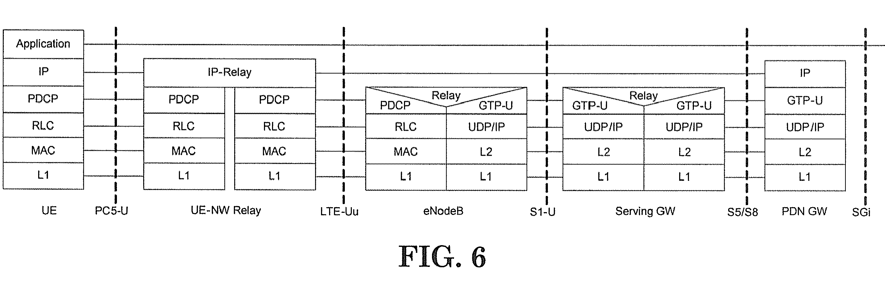

### [Figure 5.1.2.2-1 of 3GPP TS 23.303 v13.0.0 is reproduced as FIG. 6]

### Legend:

- GPRS Tunnelling Protocol for the user plane (GTP-U): This protocol tunnels user data between eNodeB and the S-GW as well as between the S-GW and the P-GW in the backbone network. GTP shall encapsulate all end user IP packets.
- MME controls the user plane tunnel establishment and establishes User Plane Bearers between eNodeB and S-GW.
- UDP/IP: These are the backbone network protocols used for routing user data and control signalling.
- LTE-Uu: The radio protocols of E-UTRAN between the UE and the eNodeB are not specified in TS 36.300 [17].
- PC5-U: The radio protocols of E-UTRAN between the UE and the UE-to-Network Relay are specified in this Release.

Editor's Note: Access Stratum stack to be reviewed and finally decided in RAN WGs.

3GPP TR 23.713 v1.6.0 specifies a solution for direct discovery and a solution for one-to-one ProSe direct communication as follows:

### 6.1 Solution for Direct Discovery (public safety use)

### 6.1.1 Functional Description

### 6.1.1.1 General

Both Model A and Model B discovery are supported:
- Model A uses a single discovery protocol message (Announcement).
- Model B uses two discovery protocol messages (Solicitation and Response).

Public Safety discovery for ProSe UE-Network Relay discovery and Group Member discovery uses the PC5-D protocol stack that is depicted in figure 6.1.1.1-1.

Additional information not directly used for discovery can be also advertised using Discovery Transport, like relayed TMGIs, the ECGI of the service cell, in a single or separate discovery messages of type "Relay Discovery Additional Information".

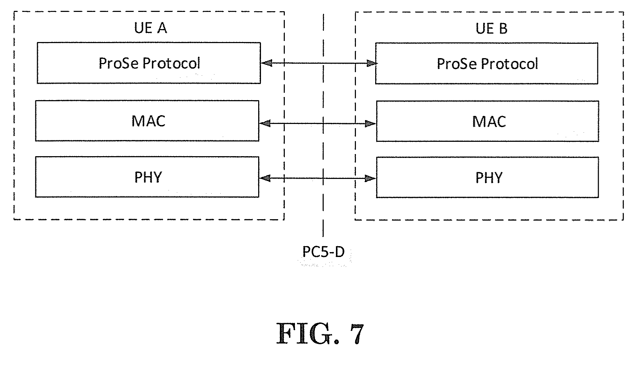

### [Figure 6.1.1.1-1 of 3GPP TR 23.713 v1.6.0 is reproduced as FIG. 7]

New PC5-D ProSe Protocol messages will need to be defined in TS 24.334: - UE-to-Network Relay Discovery Announcement message (Model A)
- UE-to-Network Relay Discovery Solicitation message (Model B)
- UE-to-Network Relay Discovery Response message (Model B)
- Group Member Discovery Announcement message (Model A)
- Group Member Discovery Solicitation message (Model B)
- Group Member Discovery Response message (Model B)

### 6.1.2 Procedures

### 6.1.2.1 General

The following use cases for public safety discovery are supported:
- UE-to-Network Relay Discovery.
- Determination is needed regarding within the ProSe Communication which user(s) are in ProSe Communication range at any given time (shortly referred to as "Group Member Discovery").
- UE-to-UE Relay Discovery.

The following parameters are common to all of UE-to-Network Relay Discovery, Group Member Discovery and UE-to-UE Relay Discovery:
- Message type: Announcement (Model A) or Solicitation/Response (Model B), Relay Discovery Additional Information (Model A).
- Discovery type: indicates whether this is UE-to-Network Relay Discovery, Group Member Discovery or UE-to-UE Relay Discovery.

The following parameters are used in the UE-to-Network Relay Discovery Announcement message (Model A):
- ProSe Relay UE ID: link layer identifier that is used for direct communication and is associated with a Relay Service Code.
- Announcer info: provides information about the announcing user.
- Relay Service Code: parameter identifying a connectivity service the ProSe UE-to-Network Relay provides to Public Safety applications. The Relay Service Codes are configured in a ProSe UE-to-Network relay for advertisement. Additionally, the Relay Service Code also identifies authorized users the ProSe UE-to-Network relay would offer service to, and may select the related security policies or information e.g. necessary for authentication and authorization between the Remote UE and the ProSe UE-to-Network Relay (e.g. a Relay Service Code for relays for police members only would be different than a Relay Service code for relays for Fire Fighters only, even though potentially they provided connectivity to same APN e.g. to support Internet Access). The definition of values of the Relay Service Code are out of scope of ProSe specification.
- Radio Layer Information: contains information about the radio layer information, e.g. radio conditions between the eNB and the UE-to-Network Relay, to assist the Remote UE selecting the proper UE-to-Network Relay.

Editor's Note: The details of Radio Layer Information parameters are to be identified and if agreed then to be defined by RAN WGs.
NOTE 1: A ProSe Relay UE ID should be uniquely associated with a Relay Service Code.
NOTE 2: ProSe Relay UE ID in the announcement message does not imply that the ProSe UE-to-Network Relay has established the indicated connectivity to the network.
   The following parameters are used in the UE-to-Network Relay Discovery Solicitation message (Model B):
   - Discoverer info: provides information about the discoverer user.
   - Relay Service Code: information about connectivity that the discoverer UE is interested in. The Relay Service Codes are configured in the Prose Remote UEs interested in related connectivity services.
   The following parameters are used in the UE-to-Network Relay Discovery Response message (Model B):
   - ProSe Relay UE ID: link layer identifier that is used for direct communication and is associated with a Relay Service Code.
NOTE 3: It is up to stage 3 specifications how the ProSe UE-to-Network Relay indicates in the response message which Relay Service Code it can support.
NOTE 4: a ProSe Relay UE ID should be uniquely associated with a Relay Service Code.
NOTE 5: ProSe Relay UE ID in the response message does not imply that the ProSe UE-to-Network Relay has established the indicated connectivity to the network.
   - Discoveree info: provides information about the discoveree.
   - Radio Layer Information: contains information about the radio layer information, e.g. radio conditions between the eNB and the UE-to-Network Relay, to assist the Remote UE selecting the proper UE-to-Network Relay.
Editor's Note: The details of Radio Layer Information parameters are to be identified and if agreed then to be defined by RAN WGs.

The following parameters are used in the Group Member Discovery Announcement message (Model A):
- ProSe UE ID: link layer identifier that is used for subsequent direct communication.
- Announcer info: provides information about the announcing user.

The following parameters are used for Group Member Discovery Solicitation message (Model B):
- Discoverer info: provides information about the discoverer user.
- Target Info: provides information about the targeted discoverees (single user or group).

The following parameters are used for Group Member Discovery Response message (Model B):
- ProSe UE ID: link layer identifier that is used for subsequent direct communication.
- Discoveree info: provides information about the discoveree.

The following parameters are used for UE-to-UE Relay Discovery:
- ProSe UE ID: link layer identifier that is used for direct communication.
- Announcer/Discoverer info: provides information about the announcing or discoverer user.
- Remote User Info: provides information about the user of a Remote UE.
- Discoveree info (Model B): provides information about the discoveree.

The following parameters can be used in Relay Discovery Additional Information:
- ProSe Relay UE ID: link layer identifier that is used for direct communication and is associated with a Relay Service Code.
- Announcer info: provides information about the announcing user.
- TMGI: indicates the MBMS service the ProSe UE-Network Relay is relaying
- ProSe Layer-2 Group ID: link layer identifier of the group that transmits the MBMS traffic corresponding to the TMGI.
- ECGI: indicates the ECGI of the serving cell of the ProSe UE-Network Relay

A single Relay Discovery Additional Information Message may carry:
- the EGCI that the ProSe UE-Network Relay is camped on or;
- one or more advertised TMGIs and their corresponding ProSe Layer-2 Group IDs up to the maximum allowed message size or;
- the EGCI that the ProSe UE-Network Relay is camped on and one or more advertised TMGIs and their corresponding ProSe Layer-2 Group IDs up to the maximum allowed message size.

The following parameters have a fixed size of maximum 64 bits: Announcer Info, Discoverer Info, Discoveree Info and Target Info. The definition of these parameters is out of ProSe scope.
NOTE 6: The size of these parameters is to be reviewed during Stage 3 work.
NOTE 7: Any mapping between application layer user identifiers of larger size to the fixed size of Announcer/ Discoverer/ Discoveree Info or Target Info is out of ProSe scope.

The Announcer Info, Discoverer Info and Discoveree Info refer to the same parameter that takes on a different name depending on the Public Safety Discovery message. It is provided to the UE during provisioning time (e.g. similar to how ProSe Layer-2 Groups are provisioned in Rel-12).

The Relay Service Code(s) are provided to the UE and ProSe UE-to-Network Relay during provisioning time (e.g. similar to how ProSe Layer-2 Groups are provisioned in Rel-12). It is assumed that the remote UEs are provisioned in advance with the Relay Service Codes corresponding to the ProSe UE-Network Relays they are allowed to access. The following are the provisioning options for Announce Info/Discoverer Info,/Discoveree Info and Relay Service Code:
- Configuration in the UICC.
- Provisioning in the ME from the Direct Provisioning Function (DPF).
- Provisioning in the ME from a 3rd party public safety provider application server (e.g. GCS AS as in TS 23.468 [15]). If UE receives the same set of data from AS that has been previously provided by DPF then UE uses the data set provided by AS.

The Target Info parameter is not provisioned in the UE. It is provided by the application layer in the UE (e.g. manually selected by the user from a contacts list).

### 6.1.2.2 UE-Network Relay discovery

### 6.1.2.2.1 Model A

Depicted in figure 6.1.2.2.1.1 is the procedure for Relay discovery Model A.

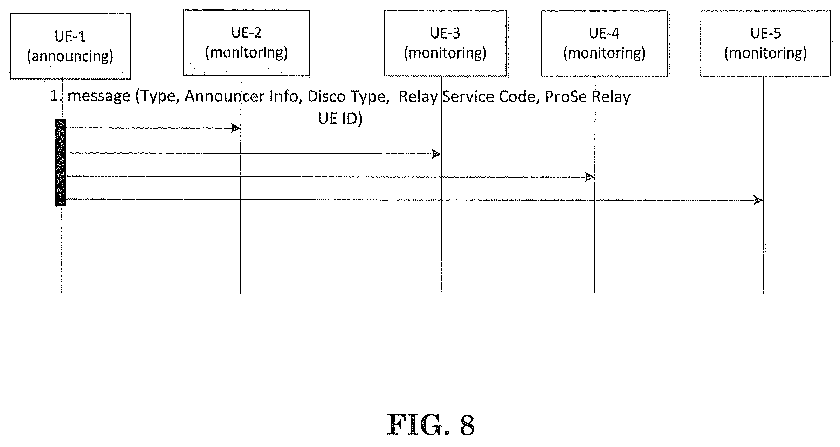

### [Figure 6.1.2.2.1.1 of 3GPP TR 23.713 v1.6.0 is reproduced as FIG. 8]

Step 1:
- Type = Announcement
- Discovery Type = UE-NW Relay Discovery

### 6.1.2.2.2 Model B

Depicted in figure 6.1.2.2.2.1 is the procedure for Relay discovery Model B.

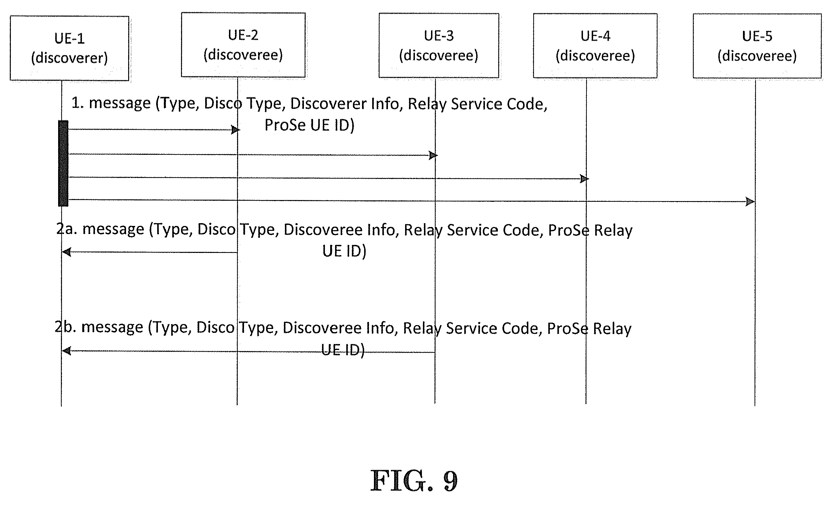

### [Figure 6.1.2.2.2.1 of 3GPP TR 23.713 v1.6.0 is reproduced as FIG. 9]

Step 1:
- Type = Solicitation
- Discovery Type = UE-NW Relay Discovery

Step 2:
- Type = Response
- Discovery Type = UE-NW Relay Discovery

### 7.1 Solution for one-to-one ProSe Direct Communication

Editor's note: This clause is intended to document the agreed architecture solution for one-to-one ProSe Direct Communication.

### 7.1.1 Functional Description

Editor's note: General description, assumptions, and principles of the solution.

### 7.1.1.1 General

ProSe direct communication one-to-one is realised by establishing a secure layer-2 link over PC5 between two UEs.

Each UE has a Layer-2 ID for unicast communication that is included in the Source Layer-2 ID field of every frame that it sends on the layer-2 link and in the Destination Layer-2 ID of every frame that it receives on the layer-2 link.
NOTE: Conflicts between Destination Layer-2 ID for unicast and one-to-many communication will be resolved by RAN2 WG.

The UE needs to ensure that the Layer-2 ID for unicast communication is at least locally unique. So the UE should be prepared to handle Layer-2 ID conflicts with adjacent UEs using unspecified mechanisms (e.g. self-assign a new Layer-2 ID for unicast communication when a conflict is detected).

The layer-2 link for ProSe direct communication one-to-one is identified by the combination of the Layer-2 IDs of the two UEs. This means that the UE can engage in multiple layer-2 links for ProSe direct communication one-to-one using the same Layer-2 ID.

### 7.1.1.2 PC5 Signalling Protocol

A PC5 Signalling Protocol is used for control plane signalling over PC5. The PC5 Signalling Protocol stack is illustrated in figure 7.1.1.2.1. The SDU Type field (3 bits) in the PDCP header is used to discriminate between IP, ARP and "PC5 Signalling Protocol".
Editor's note: The use of PC5 Signalling Protocol as described in this clause is a working assumption and needs to be reconfirmed.

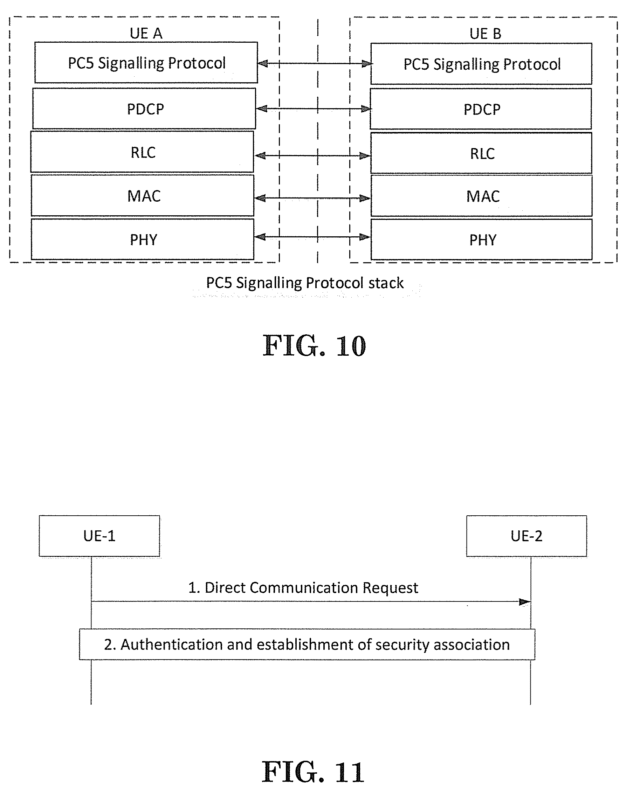

### [Figure 7.1.1.2.1 of 3GPP TR 23.713 v1.6.0 is reproduced as FIG. 10]

PC5 Signalling Protocol messages may be sent on a unicast Destination Layer-2 ID. The following functionality is enabled by the PC5 Signalling Protocol:
- **1:1 ProSe Communication:** Direct Communication Request message (Step 1 in figure 7.1.2.1.1), potentially including the subsequent messages.
- **TMGI advertisement and eMBMS traffic relay:** defined in clause 7.2.2.2, and specifically, TMGI Monitoring Request and Response messages
- **Cell ID announcement procedure:** defined in clause 7.2.2.3, and specifically Cell ID Announcement Request /Response messages.

### 7.1.2 Procedures

Editor's note: Describes the high-level operation, procedures and information flows for the solution.

ProSe direct communication one-to-one is composed of the following procedures:
- Establishment of a secure layer-2 link over PC5.
- IP address/prefix assignment.
- Layer-2 link maintenance over PC5.
- Layer-2 link release over PC5.

### 7.1.2.1 Establishment of secure layer-2 link over PC5

Depicted in figure 7.1.2.1.1 is the procedure for establishment of secure layer-2 link over PC5. The message includes the User Info-1 parameter that is used to assert the identity of the UE-1's user. UEs engaged in isolated (non-relay) one to one communication may negotiate the link-local address to be used for subsequent communication.

### [Figure 7.1.2.1.1 of 3GPP TR 23.713 v1.6.0 is reproduced as FIG. 11]

1. UE-1 sends a Direct Communication Request message to UE-2 in order to trigger mutual authentication. If link local address is used, UE 1 includes the configured link-local address in the Direct Communication Request message. UE 1 may include both an IPv4 address and an IPv6 address in the message to facilitate that UE 2 can choose the address of the IP version it supports,
   NOTE 1: The link initiator (UE-1) needs to know the Layer-2 ID of the peer (UE-2) in order to perform step 1. As an example, the link initiator may learn the Layer-2 ID of the peer by executing a discovery procedure first or by having participated in ProSe one-to-many communication including the peer.
   NOTE 2: "Secure layer-2 link" implies at least mutual authentication between the two users. Whether bearer level confidentiality or integrity protection over PC5 is mandatory or not is in SA3 scope.
2. UE-2 initiates the procedure for mutual authentication. As part of this step UE-2 includes the User Info-2 parameter that is used to assert the identity of the UE-2's user. The successful completion of the authentication procedure indicates the establishment of the secure layer-2 link over PC5. UE 2 checks whether it supports the link local address of IP version indicated in step 1. If it supports, UE 2 responds a Direct Communication Response (link-local address of UE 2) message.
   Editor's note: It is FFS whether User Info parameter used in this procedure is the same as the Announcer/ Discoverer/ Discoveree Info parameter used in the Public Safety Discovery procedures. It depends on the asserted identity that will be defined in the security procedures in SA3.

### 7.1.2.2 IP address assignment

At least the following standard IETF mechanisms are used for IP address/prefix assignment:
- DHCP based IP address configuration for assignment of IPv4 address.
- IPv6 Stateless Address auto configuration specified in RFC 4862 [6] for assignment of IPv6 prefix.

One of the two UEs acts as DHCP server or IPv6 default router.

In the ProSe UE-NW Relay case the relay acts as DHCP server or IPv6 default router for all Remote UEs that connect to it over a secure layer-2 link over PC5, detail procedures are described in clause 7.2.2.1.

UEs engaging in isolated (non-relay) one-to-one communication may also use link-local addresses. UE auto-configures link-local address using procedures as defined in RFC 4862 in case of IPv6 and in RFC 3927 in case of IPv4.

### 7.1.2.3 Layer-2 link maintenance over PC5

The PC5 Signalling Protocol shall support keep-alive functionality that is used to detect that when the UEs are not in ProSe Communication range, so that they can proceed with implicit layer-2 link release.

NOTE: It is left to Stage 3 to determine how and when the keepalive messages are used.

### 7.1.2.4 Layer-2 link release over PC5

Depicted in figure 7.1.2.4.1 is layer-2 link release procedure over PC5. This procedure can be also used to release the layer-2 link between the Remote UE and the UE-to-Network Relay, initiated by either the Remote UE or the Relay e.g. due to temporary loss of connectivity to the network, battery running low of the relay, etc.

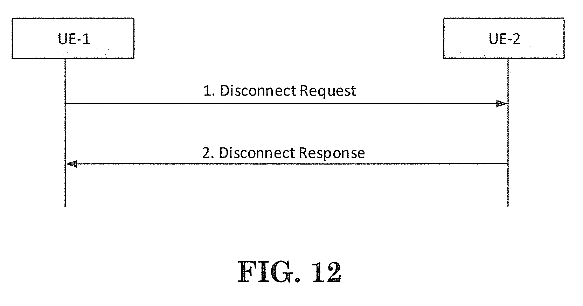

### [Figure 7.1.2.4.1 of 3GPP TR 23.713 v1.6.0 is reproduced as FIG. 12]

1. UE-1 sends a Disconnect Request message to UE-2 in order to release the layer-2 link and deletes all context data associated with.
2. Upon reception of the Disconnect Request message UE-2 responds with a Disconnect Response message and deletes all context data associated with the layer-2 link.

### 7.1.3 Impact on Existing Entities and Interfaces

Support for following PC5 functionality:
- PC5 Signalling Protocol and procedures.
- Additional mechanisms for IP address assignment.

### 7.1.4 Topics for further study for one-to-one ProSe Direct Communication

It is FFS whether the Direct Communication Request message (step 1 in figure 7.1.2.1.1) and the authentication messages (step 2 in figure 7.1.2.1.1) belong to the same or different protocols. Resolution: PC5 signalling protocol is used for both Direct Communication Request message and authentication messages.

It is FFS whether there is a need for other mechanisms for IP address assignment (e.g. to assist service continuity between the direct path and the infrastructure path between the two UEs, or for the case of an isolated (i.e. non-relay) one-to-one communication). Resolution: service continuity between the direct path and the infrastructure path is not supported.

It is FFS whether one-to-one communication requires real-time network authorisation when the two UEs are in coverage.

### Resolution: in SA3 scope

It is FFS how Layer-2 ID for unicast communication is assigned to the UE, whether the same Layer-2 ID can be used for multiple layer-2 links for one-to-one communication and whether the same Layer-2 ID can be used for Source Layer-2 ID of both one-to-one and one-to-many communication. This FFS applies to both cases when bearer level security as defined by TS 33.303[11] is used and when it is not.

Layer-2 ID for unicast communication is provided to the UE during provisioning time according to the provisioning options described in clause 6.1.2.1.

The same Layer-2 ID can be used for multiple layer-2 links for one-to-one communication. The same Layer-2 ID can be used for Source Layer-2 ID of both one-to-one and one-to-many communication. Whether and how bearer layer security is applied is in SA3 scope. The Layer-2 ID can also be self-assigned by the UE (e.g. to avoid Layer-2 ID conflict with adjacent UEs, or for ProSe UE-to-Network Relay operation).

The Layer-2 ID used as the Source Layer-2 ID in one-to-one ProSe Direct Communication frames sent from UE-1 to UE-2 is used as the Destination Layer-2 ID in the frames sent from UE-2 to UE-1.

### 7.1.5 Conclusions on one-to-one ProSe Direct Communication

The PC5 transport for signalling and user plane should follow the same per packet priority treatment defined in clause 7.5.1.

Basically, the above solutions for direct discovery and one-to-one ProSe direct communication can also be applied to ProSe UE-to-Network Relay. 3GPP TR 23.713 v1.6.0 further specifies a relay discovery and one-to-one communication establishment procedure for ProSe UE-to-Network Relay based on the above solutions as follows:

### 7.2.2.1 Relay Discovery and one-to-one communication establishment

The ProSe UE-Network Relay may attach to the network (if not already attached) and establish a PDN connection that can be used for relaying of traffic to/from Remote UEs.

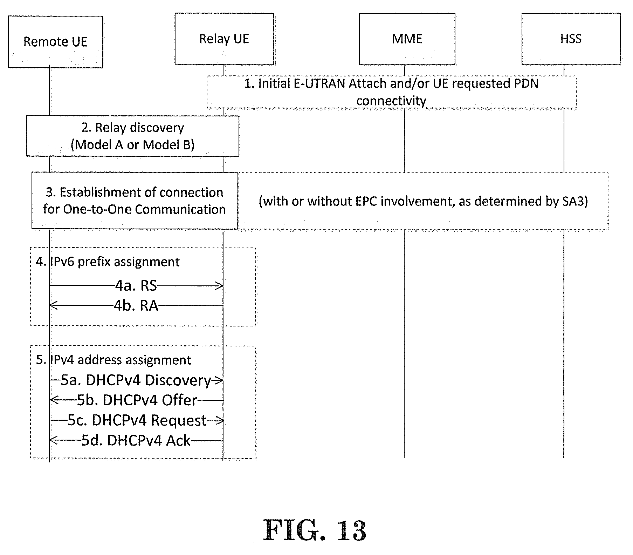

### [Figure 7.2.2.1 of 3GPP TR 23.713 v1.6.0 is reproduced as FIG. 13]

1. The ProSe UE-Network Relay performs initial E-UTRAN Attach (if not already attached) and/or establishes a PDN connection for relaying (if no appropriate PDN connection for this relaying exists). In case of IPv6, the ProSe UE-Network Relay obtains IPv6 prefix via prefix delegation function from the network as defined in TS 23.401 [7].
2. The Remote UE performs discovery of a ProSe UE-Network Relay using Model A or Model B discovery. The details of this procedure are described in clause 6.
3. The Remote UE selects a ProSe UE-Network Relay and establishes a connection for One-to-One Communication. The details of this procedure are described in clause 7.1.
   NOTE 1: Whether the authentication of the Remote UE involves the EPC will be decided by SA WG3.
4. When IPv6 is used on PC5 the Remote UE performs IPv6 Stateless Address auto-configuration, the Remote UE shall send a Router Solicitation message (step 4a) to the network using as Destination Layer-2 ID the Layer-2 ID of the Relay in order to solicit a Router Advertisement message (step 4b) as specified in IETF RFC 4862 [6]. The Router Advertisement messages shall contain the assigned IPv6 prefix. After the Remote UE receives the Router Advertisement message, it constructs a full IPv6 address via IPv6 Stateless Address auto-configuration in accordance with IETF RFC 4862 [6]. However, the Remote UE shall not use any identifiers defined in TS 23.003 [8] as the basis for generating the interface identifier. For privacy, the Remote UE may change the interface identifier used to generate the full IPv6 address, as defined in TS 23.221 [9] without involving the network. The Remote UE shall use the auto-configured IPv6 address while sending packets.
5. When IPv4 is used on PC5 the Remote UE uses DHCPv4 [10]. The Remote UE shall send DHCPv4 Discovery (step 5a) message using as Destination Layer-2 ID the Layer-2 ID of the Relay. The ProSe UE-Network Relay acting as a DHCPv4 Server sends the DHCPv4 Offer (step 5b) with the assigned Remote UE IPv4 address. When the Remote UE receives the lease offer, it sends a DHCP REQUEST message containing the received IPv4 address (step 5c). The ProSe UE-Network Relay acting as DHCPv4 server sends a DHCPACK message to the Remote UE (step 5d) including the lease duration and any other configuration information that the client might have requested. On receiving the DHCPACK message, the Remote UE completes the TCP/IP configuration process.
   NOTE 2: The DHCPv4 client may skip the DHCPv4 Discovery phase, and send DHCPv4 Request message in broadcast as the first message in accordance with the DHCPv4 renewal process.
[...]

### 7.2.5 Conclusions on ProSe UE-Network Relays

The ProSe UE-Network Relay is a Layer-3 relay (i.e. an IP router), as agreed in Rel-12 ProSe. The MBMS Relay information, TMGI, and ECGI, is sent in a Relay Discovery Additional Information Discovery message

A Relay UE supporting eMBMS traffic may transmit multiple discovery messages that contain ECGI and/or the TMGIs.

The triggering of TMGI advertisement, ECGI advertisement and establishment of the ProSe one-to-one communications links are based on the PC5 Signalling Protocol introduced in section 7.1.1.2.

The Relay selection and reselection procedure needs to consider both the upper layer discovery information defined in clause 6.1.2.1 and the radio layer information that will be defined by RAN. The interactions between these considerations at different layers are implementation specific. The ProSe Function shall be able to configure the Remote UE with a set of radio layer selection criteria for using the radio layer information in UE-to-Network Relay selection. Relay reselection when required is performed using relay selection procedure.
NOTE: The radio level information and radio layer selection criteria will be specified by RAN WGs. Relay selection/reselection may need to be evaluated based on RAN2 work.

ProSe UE-Network Relay procedure based on what is defined in the sub-clause 7.2.2.1 should proceed to the normative work except authentication part which would be done by SA3 WG. The solution for multicast/broadcast traffic support using IP multicast on relay described in clause 7.2.2.4 is not considered for specification in Rel-13.

3GPP TR 23.713 v1.6.0 specifies the related priority for sidelink transmission as follows:

### 7.5.1 Solution for ProSe Priority and QoS

### 7.5.1.1 Functional Description

Editor's note: General description, assumptions, and principles of the solution.

The Priority of a ProSe communication transmission is selected by the application layer based on criteria that are not in scope of ProSe specifications.

The design of the way the application layer and the ProSe communication lower layers interact should be neutral to the way the UE is accessing the medium i.e. whether scheduled, or autonomous transmission modes are used.

When requesting any transmission (i.e. either using one-to-one or one-to-many transport), the UE upper layers provide the lower layers a ProSe Per-Packet Priority from a range of possible values. ProSe Per-Packet Priority of the transmission is independent of the destination address. The access stratum uses this ProSe Per-Packet Priority associated with the protocol data unit as received from upper layers to prioritise in respect with other intra-UE transmissions (i.e. protocol data units associated with different priorities awaiting transmission inside the same UE) and inter-UE transmissions (where possible). Priority queues (both intra-UE and inter-UE (where possible)) are expected to be served in strict priority order i.e. the scheduler in UE or eNB serves all packets associated with ProSe Per-Packet Priority N before serving packets associated with priority N+1 (lower number meaning higher priority).

The way the medium is accessed in scheduled or autonomous transmission modes, while respecting the ProSe Per-Packet Priority selected by applications, is in scope of RAN WGs. Support of 8 levels for the ProSe Per-Packet Priority should be sufficient to support a wide range of applications.

3GPP TR 23.713 v1.6.0 also specifies the related option for determining downlink priority of sidelink transmission for ProSe UE-to-Network Relay as follows:

### 7.2.4 Topics for further study for ProSe UE-Network Relays

The following issues need to be resolved:
[...]
- It is FFS how the ProSe UE-to-Network relay applies per packet priority to the downlink traffic.
   Resolution for unicast traffic: ProSe UE-Network Relay maps the QCI of the EPS bearer into a ProSe Per Packet Priority value to be applied for the downlink relayed unicast packets over PC5. The mapping rules are provisioned in the Relay UE.
   Editor's note: For downlink unicast traffic it is FFS whether for determining of ProSe Per Packet Priority of downlink packets the Relay UE needs to use additional information.
   Final decision between these options will depend on analysis of the PCC impacts for ProSe UE-Network Relay and RAN feedback on PDCP/MAC impacts.

3GPP RAN2#91 meeting report captured the related agreements that relay UE could send resource request to eNB for requesting radio resources for relay communication after it receives a layer-2 link establishment request from remote UE as follows:

### Agreements on connection establishment

- Authorization of remote UEs is done by higher layers
- A relay UE performing relay communication has to be in RRC connected mode.
- After receiving a layer-2 link establishment request from a remote UE, the relay UE informs the eNB using *UESidelinkInformation.* The relay UE indicates in the message that the request is for relay one-to-one communication purposes. The eNB similar to rel-12 can chose to provide or not provide resources for relay communication.
- RAN2 will not define any layer-2 link establishment messages.

3GPP RAN2#91 meeting report also captured the related agreements that Rel-13 SL BSR will include priority information as follows:
Agreements
   - From RAN2 point of view a static mapping between LCID and PPP is not a feasible solution. The need to provide PPP information from the transmitter to the receiver is only for the relay case (if there is one at all). From a RAN2 point of view, the preferred solution is to provide PPP information is by including the information in the PDCP of the sidelink.
   - Define LCG per ProSe destination and within one ProSe destination, each sidelink logical channel is mapped to one of four LCGs depending on the PPP of the sidelink logical channel. FFS how the mapping between LCGID and priority is determined.
   - The same Rel-12 sidelink BSR format will be used as a baseline. When sending a SL BSR, the UE includes BS of all LCGs having SL data among all ProSe destinations as many as it can (relying on the truncation mechanism of Rel-12).
   - FFS how the ProSe BSR is constructed (the order in which BS is provided for each LCGID)
   - When the UE receives a SL grant, the UE selects the ProSe group having the sidelink logical channel with the highest PPP among the sidelink logical channels having SL data, and the serves all sidelink logical channels belonging the selected ProSe destination group in a decreasing priority order.

3GPP TS36.321 v12.6.0 specifies the following related format for SL BSR:

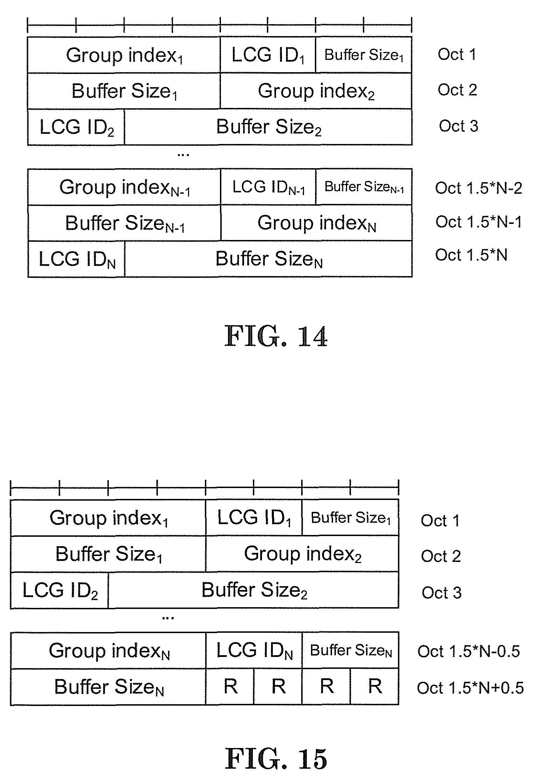

### [Figure 6.1.3.1a-1 of 3GPP TS36.321-v12.6.0 is reproduced as FIG. 14]

### [Figure 6.1.3.1a-2 of 3GPP TS36.321-v12.6.0 is reproduced as FIG. 15]

3GPP TS36.321 v12.6.0 also specifies related conditions for triggering SL BSR as follows:

### 5.14.1.4 Buffer Status Reporting

The sidelink Buffer Status reporting procedure is used to provide the serving eNB with information about the amount of sidelink data available for transmission in the SL buffers associated with the MAC entity. RRC controls BSR reporting for the sidelink by configuring the two timers *periodic-BSR-TimerSL* and *retx-BSR-TimerSL.* Each sidelink logical channel is allocated to an LCG with LCGID set to "11"[8] and belongs to a ProSe Destination. A sidelink Buffer Status Report (BSR) shall be triggered if any of the following events occur:
- if the MAC entity has a configured SL-RNTI:
   - SL data, for a sidelink logical channel of a ProSe Destination, becomes available for transmission in the RLC entity or in the PDCP entity (the definition of what data shall be considered as available for transmission is specified in [3] and [4] respectively) and there is currently no data available for transmission for any of the sidelink logical channels belonging to the same ProSe Destination, in which case the Sidelink BSR is referred below to as "Regular Sidelink BSR";
   - UL resources are allocated and number of padding bits remaining after a Padding BSR has been triggered is equal to or larger than the size of the Sidelink BSR MAC control element containing the buffer status for at least one ProSe Destination plus its subheader, in which case the Sidelink BSR is referred below to as "Padding Sidelink BSR";
   - *retx-BSR-TimerSL* expires and the MAC entity has data available for transmission for any of the sidelink logical channels, in which case the Sidelink BSR is referred below to as "Regular Sidelink BSR";
   - *periodic-BSR-TimerSL* expires, in which case the Sidelink BSR is referred below to as "Periodic Sidelink BSR";
- else:
   - An SL-RNTI is configured by upper layers and SL data is available for transmission in the RLC entity or in the PDCP entity (the definition of what data shall be considered as available for transmission is specified in [3] and [4] respectively), in which case the Sidelink BSR is referred below to as "Regular Sidelink BSR".

For Regular and Periodic Sidelink BSR:
- if the number of bits in the UL grant is equal to or larger than the size of a Sidelink BSR containing buffer status for all ProSe Destinations having data available for transmission plus its subheader:
   - report Sidelink BSR containing buffer status for all ProSe Destinations having data available for transmission;
   - else report Truncated Sidelink BSR containing buffer status for as many ProSe Destinations having data available for transmission as possible, taking the number of bits in the UL grant into consideration.

For Padding Sidelink BSR:
- if the number of padding bits remaining after a Padding BSR has been triggered is equal to or larger than the size of a Sidelink BSR containing buffer status for all ProSe Destinations having data available for transmission plus its subheader:
   - report Sidelink BSR containing buffer status for all ProSe Destinations having data available for transmission;
- else report Truncated Sidelink BSR containing buffer status for as many ProSe Destinations having data available for transmission as possible, taking the number of bits in the UL grant into consideration.

If the Buffer Status reporting procedure determines that at least one Sidelink BSR has been triggered and not cancelled:
- if the MAC entity has UL resources allocated for new transmission for this TTI and the allocated UL resources can accommodate a Sidelink BSR MAC control element plus its subheader as a result of logical channel prioritization:
   - instruct the Multiplexing and Assembly procedure to generate the Sidelink BSR MAC control element(s);
   - start or restart *periodic-BSR-TimerSL* except when all the generated Sidelink BSRs are Truncated Sidelink BSRs;
   - start or restart *retx-BSR-TimerSL;*
- else if a Regular Sidelink BSR has been triggered:
   - if an uplink grant is not configured:
      - a Scheduling Request shall be triggered.

A MAC PDU shall contain at most one Sidelink BSR MAC control element, even when multiple events trigger a Sidelink BSR by the time a Sidelink BSR can be transmitted in which case the Regular Sidelink BSR and the Periodic Sidelink BSR shall have precedence over the padding Sidelink BSR.

The MAC entity shall restart *retx-BSR-TimerSL* upon reception of an SL grant.

All triggered Sidelink BSRs shall be cancelled in case the remaining SL grant(s) valid for this SC Period can accommodate all pending data available for transmission. All triggered Sidelink BSRs shall be cancelled when a Sidelink BSR (except for Truncated Sidelink BSR) is included in a MAC PDU for transmission. All triggered Sidelink BSRs shall be cancelled, and *retx-BSR-TimerSL* and *periodic-BSR-TimerSL* shall be stopped, when upper layers configure autonomous resource selection.

The MAC entity shall transmit at most one Regular/Periodic Sidelink BSR in a TTI. If the MAC entity is requested to transmit multiple MAC PDUs in a TTI, it may include a padding Sidelink BSR in any of the MAC PDUs which do not contain a Regular/Periodic Sidelink BSR.

All Sidelink BSRs transmitted in a TTI always reflect the buffer status after all MAC PDUs have been built for this TTI. Each ProSe Destination shall report at the most one buffer status value per TTI and this value shall be reported in all Sidelink BSRs reporting buffer status for this ProSe Destination.
NOTE: A Padding Sidelink BSR is not allowed to cancel a triggered Regular/Periodic Sidelink BSR. A Padding Sidelink BSR is triggered for a specific MAC PDU only and the trigger is cancelled when this MAC PDU has been built.

Furthermore, 3GPP TS36.321 v12.6.0 describes two types of resources used for D2D (i.e., sidelink) communication: one is Model (dynamically scheduled by network via dedicated signaling) and the other one is Mode2 (UE autonomously selecting from a resource pool). More specifically, 3GPP TS36.321 v12.6.0 states:

### 5.14.1 SL-SCH Data transmission

### 5.14.1.1 SL Grant reception and SCI transmission

In order to transmit on the SL-SCH the MAC entity must have a sidelink grant. The sidelink grant is selected as follows:
- if the MAC entity is configured to receive a sidelink grant dynamically on the PDCCH and more data is available in STCH than can be transmitted in the current SC period, the MAC entity shall:
   - using the received sidelink grant determine the set of subframes in which transmission of SCI and transmission of first transport block occur according to subclause 14.2.1 of [2];
   - consider the received sidelink grant to be a configured sidelink grant occurring in those subframes starting at the beginning of the first available SC Period which starts at least 4 subframes after the subframe in which the sidelink grant was received, overwriting a previously configured sidelink grant occurring in the same SC period, if available;
   - clear the configured sidelink grant at the end of the corresponding SC Period;
- else, if the MAC entity is configured by upper layers to transmit using a pool of resources as indicated in subclause 5.10.4 of [8] and more data is available in STCH than can be transmitted in the current SC period and if the MAC entity does not have a configured sidelink grant, the MAC entity shall:
   - randomly select the time and frequency resources for SL-SCH and SCI of a sidelink grant from the resource pool configured by upper layers. The random function shall be such that each of the allowed selections [2] can be chosen with equal probability;
   - use the selected sidelink grant to determine the set of subframes in which transmission of SCI and transmission of first transport block occur according to subclause 14.2.1 of [2];
   - consider the selected sidelink grant to be a configured sidelink grant occurring in those subframes starting at the beginning of the first available SC Period which starts at least 4 subframes after the subframe in which the sidelink grant was selected;
   - clear the configured sidelink grant at the end of the corresponding SC Period;

3GPP R2-153252 introduced some options for resource allocation for relay communication as follows:

### Resource allocation options for ProSe UE-to-NW relay

Based on the architecture assumptions in Section 2, the resource allocation mechanisms can be discussed in this section.

### Resource allocation method 1 with UE-selected mode

Based on Release 12 agreements on ProSe communication resource pool configuration, we think that if architecture option 1 is adopted, then there can be one simple method to allocate radio resource for the remote UE which is shown in Figure 2.

In this method, the relaying UE firstly acquire the resource pool(s) configuration from the eNB and then broadcast to the remote UE(s). When the remote UE(s) acquire(s) the resource pool(s), it conducts ProSe transmission with resources selected from the pool(s). In such option, the remote UE can only support UE-selected mode ProSe transmission which may be considered as a limitation.

### [Figure 2 of 3GPP R2-153252 has been omitted]

### Resource allocation method 2 with relaying UE as scheduler

To resolve the limitation in method 1, there can be another method as shown in Figure 3 which also assumes architecture option 1 discussed in Section 2. In this method, the relaying UE acquires the resource pool information from the eNB. Then, the relaying UE can support the scheduling of remote UE for ProSe transmission. The relaying UE needs to be enhanced so that it can terminate the remote BSR signaling message.

### [Figure 3 of 3GPP R2-153252 has been omitted]

### Resource allocation method 3 with eNB as scheduler

There can be another approach which follows architecture option 2 discussed in Section 2 as shown in Figure 4. In this option, the BSR originated from the remote UE is relayed to the eNB by the relaying UE and eNB sends the grant to the remote UE which is relayed by the relaying UE in the opposite direction. For this option, the latency of the BSR and grant messages may impact the ProSe communication performance and also the eNB's load is increased.

### [Figure 4 of 3GPP R2-153252 has been omitted]

In summary, we think that the above mentioned three methods should be studied and then RAN2 can decide which method(s) should be adopted.

3GPP R2-153129 also introduces some options for resource allocation for relay communication as follows:
In release 13 we should also aim to support 2 modes of resource allocation. Given that this is intended to provide an extension of coverage, then it should be possible for the network to control what resources are being used.

### [...]

### UE autonomous resource selection:

This would essentially operate in exactly the same way as a Release 12 out of coverage UE. The only exceptions may be that there can be a separate resource pool for UEs communicating with a relay, compared to other UEs which are broadcasting to other UEs directly, using the incoverage or out-of-coverage resource pool and the Rel-12 mechanism, and there would be a unique group identity for each UE-relay communication.
**Proposal 1: UE Autonomous resource selection mode is supported for transmissions from a remote UE to a relay, and the mechanism defined in Release 12 is re-used.**
**Proposal 2: It should be possible to configure a resource pool for exclusive use by any particular UE connected to a relay, which is separate to the Release 12 resource pool.** [...]

### Scheduled resource allocation:

Of course for this case the eNB cannot directly schedule the out of coverage UE. However, since the UE communicating with the relay will have both an uplink and a downlink (both using 1:M broadcast, with L3 forwarding) the resources used for transmission on the uplink (UE to relay) can be allocated when there is a transmission on the downlink (relay to UE). For example, the sidelink control transmitted by the relay can include either an explicit indication of resources to use for the response, or an implicit relationship could be defined.

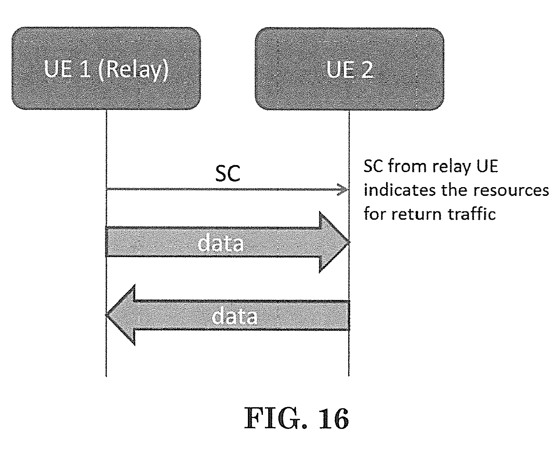

### [Figure 1 of 3GPP R2-153129 is reproduced as FIG. 16]

This approach would work for cases whereby there is a predictable transmission in the uplink, such as exchange of signalling or configuration information, for downlink data transfer requiring TCP ACKs to be sent in the uplink, or for other symmetrical traffic such as speech.

3GPP R2-153100 proposes using pre-configured resources for relaying traffic from remote UE to relay UE as follows:
**Proposal 1: OOC Remote UE transmits to Relay UE using the pre-configured TX resources. Relay** UE **transmit to Remote UE using the resources configured (Scheduled or UE selected) by eNB in dedicated signaling.**

3GPP S2-152570 considers that EPC is not aware of remote UE as follows:

### 2.1. EPC awareness of the remote UE's presence

We would propose not to support EPC awareness of the remote UE's presence in this release because we have no specific solution yet.

### Proposal 1: EPC awareness of the remote UE's presence is not supported in this release

For relay communication, a relay UE is inside coverage of a network, and a remote UE served by the relay UE could be outside coverage of the network. Resource allocation for the relay communication could be considered in two aspects: UL (Uplink) direction (i.e., relaying traffic from the remote UE to the network) and DL (Downlink) direction (i.e., relaying traffic from the network to the remote UE).

Based on 3GPP R2-153252, R2-153129, and R2-153100, it seems possible to use the preconfigured resource pool for relay communication in the UL direction because the remote UE is outside coverage of the network and the network cannot directly allocate resources for the remote UE. However, in the DL direction, because the relay UE is inside coverage of the network, it is possible that the network could directly allocate resources for the relay UE for the relay communication. If the network configures the relay UE to use Mode1 type resource, the relay UE should transmit a SL BSR (Sidelink Buffer Status Report) to the network so that the network can schedule SL grant based on the SL BSR received from the relay UE.

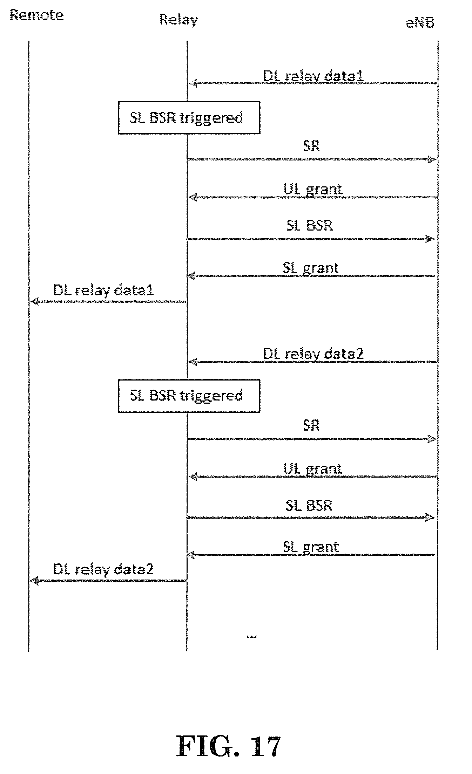

According to 3GPP TR23.713, the remote UE and the relay UE could start relay traffic transmissions when IP address configuration is done. After the relay UE receives a DL packet from the eNB, an IP router function in the relay UE would determine that the received DL packet is for the remote UE and would forward the DL packet to corresponding SL PDCP (Packet Data Convergence Protocol) entity of the relay UE. In that situation, the relay UE may trigger a regular SL BSR based on the current buffer status (e.g., new data available for SL transmission) and may then initiate a SL resource request procedure (e.g., sending SR and reporting the regular SL BSR). After a SL grant is received from the eNB, the relay UE could use the SL grant to send the received DL packet to the remote UE. In this case, it is possible that such SL resource request procedure would be performed every time a DL packet belonging to the remote UE is received from the eNB. This situation results in unnecessary signaling overhead, and is illustrated in FIG. 17.

Currently, from the eNB's perspective, the eNB can only know DL packets transmitted on a bearer is delivered to the relay UE because the eNB and/or EPC (Evolved Packet Core) is not aware of the remote UE's presence. However, from the relay UE's perspective, the relay UE would understand whether or not the bearer is used for the relay communication and would know that which remote UEs use the bearer (as discussed in 3GPP R2-151326 and R2-153164).

It is assumed that the eNB could receive information from the relay UE or from an entity of core network (e.g. MME) where the information indicates that the bearer is used for the relay communication. Thus, the eNB may know how to schedule SL resources needed by the relay UE depending on the size of DL packets (to be) transmitted on the bearer.

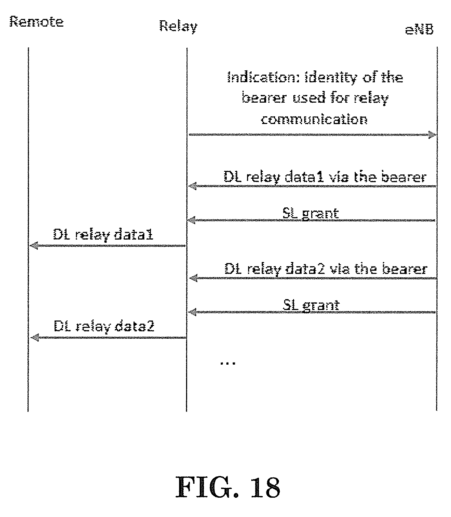

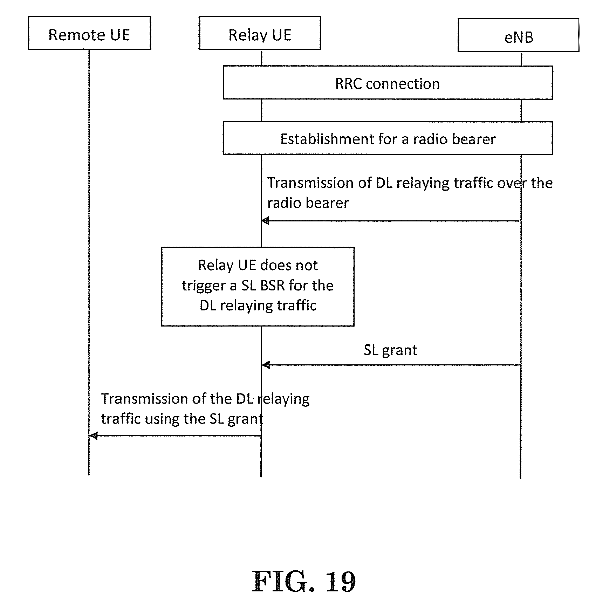

If this is the case, the relay UE does not need to trigger a regular SL BSR when the DL packet for the remote UE is received form the eNB. By this way, the relay UE will not initiate the SL resource request procedure. Therefore, the signaling overhead could be reduced because sending SR and PDCCH allocating UL grant are not needed, and UL resources used for reporting the regular SL BSR could be saved. FIG. 18 illustrates a general concept in accordance with a first exemplary embodiment according to the invention, and FIG. 19 illustrates a possible service flow in accordance with a second exemplary embodiment according to the invention.

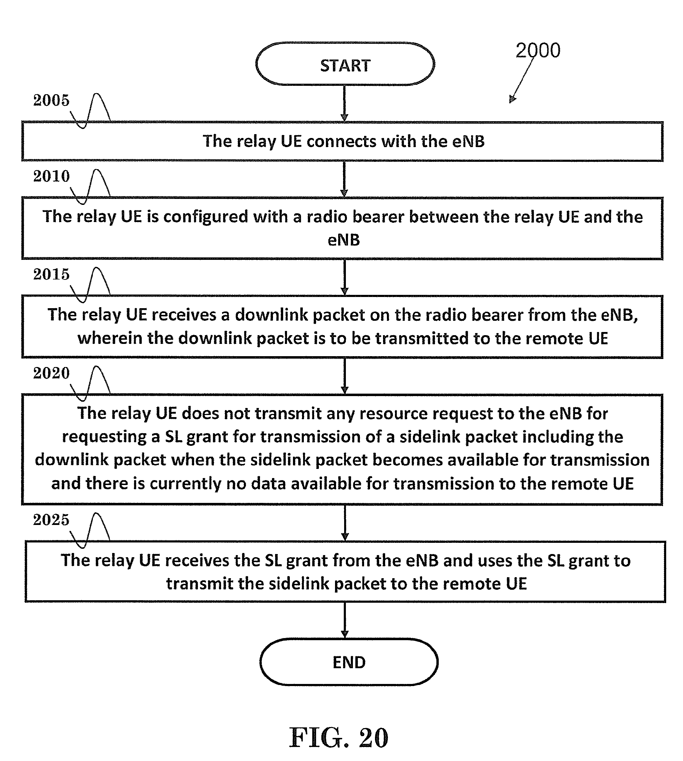

FIG. 20 is a flow chart 2000 in accordance with a third exemplary embodiment according to the invention. FIG. 20 generally outlines a method for a relay UE to receive packets from an eNB where the relay UE acts as a relay for forwarding the packets between a remote UE and the eNB. The relay UE is in network coverage, and could be in the RRC_CONNECTED state. The remote UE could be in network coverage or out of network coverage.

In step 2005, the relay UE connects with the eNB. Preferably, the relay UE could establish a RRC (Radio Resource Control) connection with the eNB.

In step 2010, the relay UE is configured with a radio bearer between the relay UE and the eNB. Preferably, the relay UE is configured with a SL-RNTI (Sidelink Radio Network Temporary Identifier) by the eNB. Furthermore, the radio bearer could be associated with a downlink logical channel.

Preferably, the relay UE receives a RRC (Radio Resource Control) message from the eNB, wherein the RRC message indicates the relay UE to establish the radio bearer. Furthermore, the radio bearer could be associated with an EPS (Evolved Packet System) bearer, and the EPS bearer could be associated with a PDN (Packet Data Network) connection that is established between the relay UE and a PDN gateway (PDN GW). In addition, there is a one-to-one mapping between the EPS bearer and the radio bearer.

Preferably, the relay UE sends a message (e.g. RRC message or NAS(Non-Access Stratum) message) including information to the eNB after the relay UE is configured with the radio bearer, wherein the information indicates that the radio bearer is used for relay communication. The information could include an identity of the radio bearer or an identity of a EPS bearer associated with the radio bearer.

In step 2015, the relay UE receives a downlink packet on the radio bearer from the eNB, wherein the downlink packet is to be transmitted to the remote UE. Preferably, the downlink packet could be a transport block, a MAC (Medium Access Control) PDU (Protocol Data Unit), a RLC (Radio Link Control) PDU, a PDCP (Packet Data Convergence Protocol) PDU, or an IP (Internet Protocol) packet.

Preferably, the relay UE receives a downlink control information on a first downlink channel scrambled by the SL-RNTI from the eNB, wherein the downlink control information informs the relay UE to receive the downlink packet on a second downlink channel scrambled by the SL-RNTI from the eNB. In addition, the first downlink channel could be a PDCCH (Physical Downlink Control Channel), while the second downlink channel is could be a PDSCH (Physical Downlink Share Channel).

In step 2020, the relay UE does not transmit any resource request to the eNB for requesting a sidelink (SL) grant for transmission of a sidelink packet including the downlink packet when the sidelink packet becomes available for transmission and there is currently no data available for transmission to the remote UE. The downlink packet could be completely or partially included in the sidelink packet. The eNB may allocate the relay UE with one or more SL grant so that the downlink packet can be completely transmitted from the relay UE to the remote UE. Preferably, the resource request could be a scheduling request (SR) signaling and a SL buffer status report (BSR). The resource request could also be just a SR signaling.

Preferably, the relay UE does not transmit any resource request to the eNB for requesting a sidelink (SL) grant for transmission of a sidelink packet (including the downlink packet) when the relay UE does not have enough available sidelink resources to completely transmit the sidelink packet.

When a SL logical channel belonging to the remote UE has data available for transmission due to reception of the downlink packet and there is currently no data available for any SL logical channels belonging to the remote UE for transmission, the relay UE could not trigger the SL BSR so as to avoid transmission of SR signaling; or the relay UE still triggers the SL BSR but the transmission of SR signaling triggered by the SL BSR is prohibited for the SL logical channel which is associated with the radio bearer used for the relay communication. The eNB may schedule the relay UE with additional UL resources for transmission of the SL BSR after the downlink packet is transmitted to the relay UE. Preferably, the SL BSR could be a regular SL BSR.

In step 2025, the relay UE receives the SL grant from the eNB and uses the SL grant to transmit the downlink packet to the remote UE. Preferably, the SL grant could be radio resources indicated by the downlink control information received from the eNB. Preferably, the relay UE uses the SL grant to transmit part of the downlink packet to the remote UE if the SL grant cannot completely accommodate the downlink packet.

Preferably, the downlink control information indicates that the SL grant should be used for the remote UE and/or for the downlink packet. Furthermore, the relay UE could use the SL grant to transmit the downlink packet for the remote UE based on the downlink control information. Alternatively, the relay UE could use the SL grant to transmit the downlink packet for the remote UE based on timing relation, wherein the timing relation means a duration between a subframe on which the downlink packet is received and a subframe on which the SL grant is received.

Preferably, the relay UE establishes a layer-2 link with the remote UE. Furthermore, the relay UE transmits the downlink packet to the remote UE over the layer-2 link. In addition, the layer-2 link is identified by a combination of a layer-2 identity of the relay UE and a layer-2 identity of the remote UE. Also, a frame transmitted over the layer-2 link includes the layer-2 identity of the relay UE and the layer-2 identity of the remote UE. Preferably, the layer-2 identity of the relay UE could be a ProSe (Proximity-based Service) Relay UE Identity that is associated with a Relay Service Code, wherein the Relay Service Code identifies a connectivity service the relay UE provides to the remote UE or is associated with a PDN connection. And the layer-2 identity of the remote UE could be a ProSe UE Identity.

Preferably, the relay UE starts or restarts a timer when the relay UE receives the downlink packet or when the relay UE receives the SL grant. Furthermore, the relay UE could trigger a SL BSR due to expiry of the timer and transmit the SL BSR to the eNB. The SL BSR could be a Regular SL BSR or a Periodic SL BSR.

Preferably, the relay UE could trigger a regular SL BSR for indicating demand of SL resource for transmitting data related to the remote UE and for transmitting a SR (Scheduling Request) to the eNB, when the relay UE wants to send a control message generated by the relay UE itself to the remote UE and there is currently no data available for transmission for any of sidelink logical channels belonging to the remote UE. The data could be the control message.

Referring back to FIGS. 3 and 4, in one exemplary embodiment from the perspective of a relay UE, the device 300 includes a program code 312 stored in the memory 310. The CPU 308 could execute program code 312 to enable the relay UE (i) to connect with the eNB, (ii) to establish a radio bearer between the relay UE and the eNB, (iii) to receive a downlink packet on the radio bearer from the eNB, wherein the downlink packet is to be transmitted to the remote UE, (iv) to not transmit any resource request to the eNB for requesting a sidelink (SL) grant for transmission of a sidelink packet including the downlink packet when the sidelink packet becomes available for transmission and there is currently no data available for transmission to the remote UE, and (v) to receive the SL grant from the eNB and to use the SL grant to transmit the sidelink packet to the remote UE. Furthermore, the CPU 308 can execute the program code 312 to perform all of the above-described actions and steps or others described herein.

Various aspects and embodiments of the disclosure have been described above. It should be apparent that the teachings herein may be embodied in a wide variety of forms and that any specific structure, function, or both being disclosed herein is merely representative. Based on the teachings herein one skilled in the art should appreciate that an aspect or embodiment disclosed herein may be implemented independently of any other aspects or embodiments and that two or more of these aspects and/or embodiments may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects and/or embodiments disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects and/or embodiments any suitable computer-program product may comprise a computer-readable medium comprising codes relating to one or more of the aspects and/or embodiments of the disclosure. In some aspects and/or embodiments a computer program product may comprise packaging materials.

While the invention has been described in connection with various aspects and embodiments, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for a relay User Equipment, in the following also referred to as UE, for forwarding packets between a remote UE and an evolved Node B, in the following also referred to as eNB, comprising:
the relay UE connects with the eNB (2005);
the relay UE is configured with a radio bearer between the relay UE and the eNB (2010);
the relay UE receives a downlink packet on the radio bearer from the eNB, wherein the downlink packet is to be transmitted to the remote UE (2015);
the relay UE does not transmit any resource request to the eNB for requesting a sidelink grant for transmission of a sidelink packet including the downlink packet when the sidelink packet becomes available for transmission and there is currently no data available for transmission to the remote UE (2020); and
the relay UE receives the sidelink grant from the eNB and uses the sidelink grant to transmit the sidelink packet to the remote UE (2025).

2. The method of claim 1, further comprising:
the relay UE does not trigger a Sidelink Buffer Status Report, in the following also referred to as SL BSR, for the sidelink packet; or
the relay UE triggers the SL BSR for the sidelink packet but does not further trigger a transmission of Scheduling Request, in the following also referred to as SR, signaling.

3. The method of claim 2, wherein the resource request is the SL BSR and/or the SR signaling.

4. The method of any one of the preceding claims, further comprising:
the relay UE receives a Radio Resource Control, in the following also referred to as RRC, message from the eNB, wherein the RRC message informs the relay UE to establish the radio bearer.

5. The method of any one of the preceding claims, further comprising:
the relay UE establishes a layer-2 link with the remote UE and transmits the sidelink packet to the remote UE over the layer-2 link.

6. The method of claim 5, wherein the layer-2 link is identified by a combination of a layer-2 identity of the relay UE and a layer-2 identity of the remote UE.

7. The method of claim 6, wherein a frame transmitted over the layer-2 link includes the layer-2 identity of the relay UE and the layer-2 identity of the remote UE, and the frame carries the downlink packet.

8. The method of claim 6 or 7, wherein the layer-2 identity of the relay UE is a Proximity-based Service, in the following also referred to as ProSe, Relay UE Identity associated with a Relay Service Code, wherein the Relay Service Code identifies a connectivity service the relay UE provides to the remote UE or is associated with a Packet Data Network, in the following also referred to as PDN, connection.

9. The method of any one of the preceding claims, wherein the sidelink grant is radio resource(s) indicated by a downlink control information received from the eNB.

10. The method of any one of the preceding claims, further comprising:
the relay UE transmits the resource request to the eNB for requesting Sidelink, in the following also referred to as SL, grant for transmission of control message generated by the relay UE itself, wherein the control message is to be transmitted to the remote UE and the resource request is a Sidelink Buffer Status Report, in the following also referred to as SL BSR, triggered by the control message arrival and/or a Scheduling Request, in the following also referred to as SR, signaling triggered by the SL BSR.

11. A relay User Equipment, in the following also referred to as UE, for forwarding packets between a remote UE and an evolved Node B, in the following also referred to as eNB, comprising:
a control circuit (306);
a processor (308) installed in the control circuit (306); and
a memory (310) installed in the control circuit (306) and operatively coupled to the processor (308);
wherein the processor (308) is configured to execute a program code (312) stored in the memory (310) to enable the relay UE to perform the method steps as defined in any one of the preceding claims.
